(19) Europäisches Patentamt

European Patent Office

Office européen des brevets

(11) Publication number: **0 208 794**
**B1**

# (12) EUROPEAN PATENT SPECIFICATION

(45) Date of publication of the patent specification:
03.10.90

(51) Int. Cl.⁵: **A01D 41/14**

(21) Application number: **85108659.5**

(22) Date of filing: **11.07.85**

(54) Cutting header for a harvesting machine.

(43) Date of publication of application:
**21.01.87 Bulletin 87/4**

(45) Publication of the grant of the patent:
**03.10.90 Bulletin 90/40**

(84) Designated Contracting States:
**AT BE CH DE FR GB IT LI LU NL SE**

(56) References cited:
**DE-A- 2 613 153**
**FR-A- 2 530 921**
**GB-A- 2 070 905**
**US-A- 2 913 865**
**US-A- 3 349 549**
**US-A- 4 124 970**
**US-A- 4 171 606**
**US-A- 4 193 250**
**US-A- 4 204 383**
**US-A- 4 414 792**

(73) Proprietor: **DE ROTTERDAMSCHE DROOGDOK MAATSCHAPPIJ B.V., Heijplaatstraat 21 Postbus 913, NL-3000 AX Rotterdam(NL)**

(72) Inventor: **Brunér, Hasse, Rackekärr, S-544 00 Hjo(SE)**
Inventor: **Persson, Lars-Inge, Nygardsvägen 35, S-263 00 Höganäs(SE)**

(74) Representative: **Hynell, Magnus, Hynell Patenttjänst AB Box 236, S-683 02 Hagfors(SE)**

ACTORUM AG

## Description

### TECHNICAL FIELD

The invention relates to a header for a harvesting machine provided with means for automatic elevation of the feeding apron of the header if the cutter assembly runs into the ground or some other stationary obstruction, as defined in the preamble of Claim 1.

### BACKGROUND ART

There are several demands made on the cutting header of a harvesting machine. The first demand is that the crop be cut at the desired height and be delivered as desired for further treatment in the harvester. Therefore, the cutting header must be adjustable in accordance with often very varied harvesting conditions or other specific demands. As an example may be mentioned the demands made on the header of a whole crop harvester, which include a very low stubble height. Prior art often includes adjustable skids in combination with a spring balancing system to make the header follow the ground contour closely. In this case it is very important that the header is well balanced, in other words the weight of the header must not exceed the carrying ability of the skids in case the skids run into an elevation. Otherwise the header easily digs into the ground, which implies a great risk for extensive damage. In other words, the header must be floating. It has been difficult to unite these demands according to prior art. This is especially true for very large and heavy cutter headers, with a great mass to be accelerated and hence a low mobility.

Prior art also includes the use of mobile headers in combination with sensing runners or other sensing elements underneath the cutter-bar, which detect unevenness of the ground and feed impulses to the hydraulic cylinders of the integrated cutting header. These known systems also include hydraulic balancing as disclosed e.g. in GB-A 2 070 905 and US-A 2 913 865. The main purpose is to control the set stubble height automatically. The existing systems have not, however, solved the above problem, and have in practice exhibited certain other drawbacks, such as a risk of having the reel run into the cutter-bar when working at a low height if the header is raised quickly as a result of the detectors sensing some elevation of the ground underneath the cutter-bar.

### BRIEF DISCLOSURE OF THE INVENTION

The object of the invention is to provide an improved header by solving the problems outlined above. This and other objects may be realized by providing the additional features contained in the characterising portion of Claim 1.

It is suitable to let the cutter-bar normally be carried at a certain set position, the torque which is developed by the cutter-bar and the associated driving means about the second turning axis being balanced by spring force or the like. The cutter-bar assembly may be integrated with the front arm of a two-armed lever, the said set position being determined by an adjustable stop against which either of the arms of said two-armed lever rests when in normal position, the rear lever arm being acted upon by said spring force or the like.

The header normally also includes a reel assembly with hydraulically extendible arms which may be turned about a horizontal turning axis. The extendible arms are supported by hydraulically extendible supporting arms, which, according to one embodiment of the invention, stand on the mobile feeding apron, thus providing for the reel to be raised concurrently, with the mobile feeding apron, should the cutter-bar run into some obstacle, and thereby preventing the reel from running into the cutter-bar, when the reel is operating in its lower-most position over the cutter-bar.

Further characteristics, objects, and advantages of the invention will become apparent from the appended claims and the following description of some preferred embodiments.

### BRIEF DESCRIPTION OF DRAWINGS

In the following description of preferred embodiments, reference will be made to the attached drawings, wherein

Fig. 1 is a partly schematic sectional side elevation of a first preferred embodiment of the header according to the invention, the plane of the section being parallel to the crop feeding direction;

Fig. 2 is a side elevation showing the cutter-bar of the header in greater detail;

Fig. 3 is a circuit diagram of the regulating system of the header; and

Fig. 4 shows a second embodiment of the header according to the invention.

### DESCRIPTION OF PREFERRED EMBODIMENTS

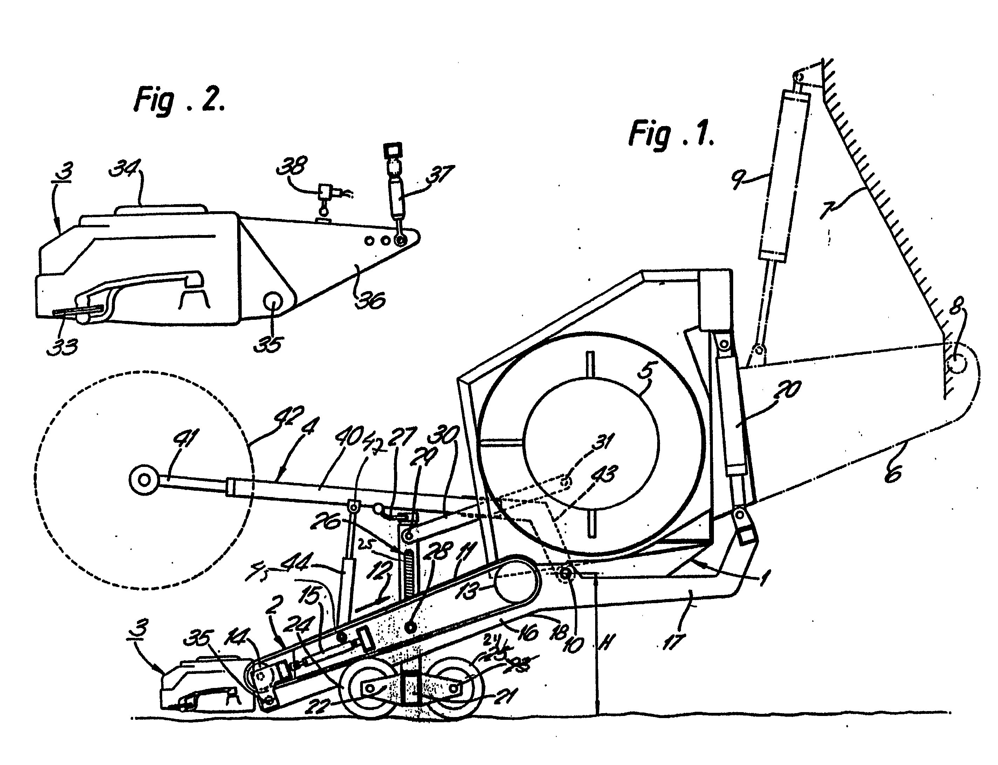

The header shown in Fig. 1 comprises four major parts, a stationary table 1, a mobile feeding apron 2, a cutter assembly 3, and a reel assembly 4.

The stationary table 1 according to the art comprises a feeding auger 5 and is integrated with an elevator house 6, which comprises an elevator (not shown) transporting the crop into the harvester. The harvester is symbolically designated 7. The stationary table 1 pivots about an axis 8 in the harvester and is turned by a pair of hydraulic cylinders 9 to be set in a chosen position. This set position is characterized by the distance H between the ground and a horizontal first axis 10.

The feeding apron 2 consists of a number of inter-connected sections. Each section is provided with an endless feed belt 11, which is driven in the direction of the arrow 12 by a drive pulley 13, powered by a hydraulic motor (not shown). A first pulley is designated 14. The belt 11 is tensioned by means of a pair of gas springs 15. The belt 11 feeds the material from the cutter assembly 3 to the stationary table 1, from where it is transported by the auger 5 and the elevator. The gables of the described feeding apron 2 constitute the front arms 16 of a pair of two-armed levers 18. The rear arms of the two levers have been designated 17. In this manner, the feeding apron 2 is hinged via the gables/lever arms 18 to the stationary table 1, so that the lever arms 18 and hence the apron 2 may pivot about said first turning axis 10, which has been set by the operator at a certain working position, stationary in relation to the harvester 7.

On the underside of the feeding apron 2, across its entire breadth, there are a number of wheels 24 distributed before and behind a support 21. The hubs of the wheels are stiffly attached to the support so as to avoid a bogie truck effect in the assembly. The wheels 24 can be replaced by skids. At each end of the support 21 an internally threaded sleeve 26 extends vertically upwards. In each of the sleeves 26 there is a screw 25 which may be turned by means of a handle 27. Each of the sleeves 26 is attached to the gable of the feeding apron 2, specifically to the front lever arm 16, via a hinge 28. At the top of the sleeve 26 there is a second hinge 29, which is the turning point of a tie rod 30. The second turning point of the tie rod 30 is vertically above the said first turning axis 10. The screw 25 in the threaded sleeve 26 is stiffly attached to the beam 21. The described arrangement provides for the wheels 24 to remain in horizontal plane, contrary to the situation with a bogie type assembly, and the sleeve 26 with the screw 25 inside it will always remain vertical. By turning the screw 25 in the sleeve 26 at both sides of the header the feeding apron 2 and hence the cutter assembly 3 may be raised or lowered with respect to the ground.

The reel assembly 4 comprises a pair of extension cylinders 40. At the outer end of the piston rod 41 on each of the extension cylinders 40 the reel 42 is mounted according to prior art. The extension cylinders 40 - one on each side of the header - are mounted on an arm 43, which is journalled about the same first turning axis 10 as the feeding apron 2 or, as an alternative, about an other turning axis on the table 1. Each of the extension cylinders 40 is supported by a hydraulic cylinder 44 which raises and lowers the extension cylinder 40 and consequently the reel 42. The cylinder 44 is hinged to the gable of the feeding apron 2 by a hinge 45 at its bottom end, in other words at the front arm 16 of the two-armed lever 18, and the piston rod of the cylinder 44 is connected to an extension cylinder through a hinge 47.

The apron 2 with its sides or gables 18 as well as the reel assembly 4 including the reel 42 which is supported on the apron 2 are counter-balanced about the turning axis 10 by means of two hydraulic cylinders 20 and a gas accumulator 50 integrated in the hydraulic system. The piston rods of the hydraulic cylinders 20 are attached to the rear ends of the rear lever arms 17 of the levers 18.

The cutter assembly 3 comprises, according to prior art, a knife 33 and a drive unit 34. From predetermined set positions, as determined by an adjustable stop 23 on the mobile feeding apron, the cutter assembly 3, see Fig. 2, may be turned upwards, i.e. clockwise as depicted in Figs. 1 and 2, about a horizontal second axis 35, which is the turning axis of a two-armed lever. By moving the stop 23, the cutting angle, i.e. the angle of inclination of the knife 33 to the standing crop may be changed. The front arm of the lever carries the cutter assembly proper, comprising the knife 33 and the drive unit 34, while the second, rear arm consists of a bracket-like horn 36, resting against the adjustable stop. At the extreme end of the horn 36 there is also a gas spring 37, which balances the weight of the cutter assembly 3. A micro-switch has been designated 38. Should the cutter assembly 3 run into the ground or into some obstacle, the assembly is turned upwards about the second axis 35. If it turns more than a pre-determined angle, the micro-switch 38 is activated, which in turn disconnects a circuit in the regulating system, causing the hydraulic cylinders 20 to lift the feeding apron 2.

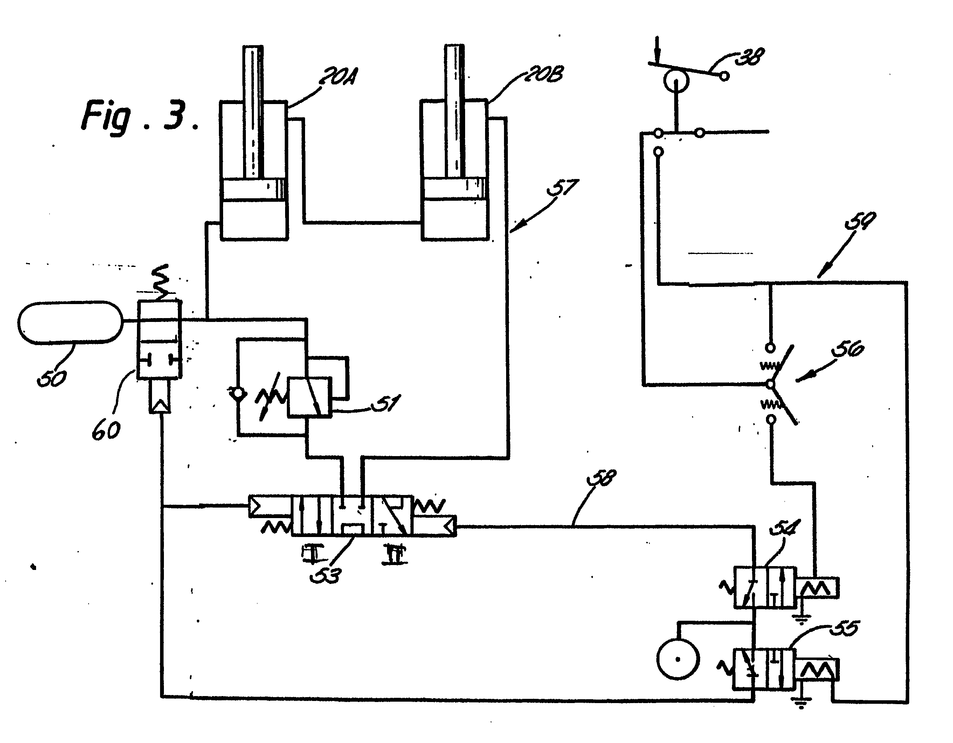

Referring now to Fig. 3, the regulating system functions as follows. For the purpose of turning the lever 18 about said first turning axis 10, see Fig. 1, two hydraulic cylinders 20 are provided. In Fig. 3, these have been designated 20A and 20B. The first cylinder 20A is a master cylinder and the second 20B is a slave cylinder. The regulating system comprises the following units: a gas accumulator 50, an adjustable counter-pressure valve 51, with a built-in check valve 52, a hydraulic four-way/three position directional valve 53, a first electro-pneumatic three-way/two position directional valve 54, a second electro-pneumatic three-way/two position directional valve 55, a toggle switch 56, a cut-off valve 60, and the micro-switch 38, see Fig. 2. Further, the hydraulic circuit, which is connected to the hydraulic system of the harvester has been designated 57, a pneumatic circuit has been designated 58, and an electric maneouvering circuit has been designated 59.

When the machine is in operation, there is a balanced hydraulic pressure in the accumulator 50, and this pressure is transmitted to the slave cylinder 20B via the master cylinder 20A. The pressure is adjusted so that the wheels 24 of the feeding apron 2 rest on the ground with a slight pressure. In other words, the hydraulic cylinders 20A and 20B keep the feeding apron 2 balanced against the ground with a pre-determined hydraulic pressure via the valve 51. Unevenness of the ground, being detected by the wheels 24 and via the sleeve 26, the shaft 28 and the lever arm 16 causing the lever 18 to turn about the axis 10, thus affecting the cylinders 20A and 20B, is absorbed by the spring action of the accumulator 50. The valve 53 is put in working position, position II, by the toggle switch 56. The instruction to the valve 53 to assume working position is passed on from the toggle switch 56 by the first electro-pneumatic valve 54. The operating current to the first electro-pneumatic valve 54 is supplied via the toggle switch 56 from the micro-switch 38.

Should the cutter assembly 3 run into some mechanical obstruction and be forced upwards a certain angle about the second axis 35, the micro-switch 38 will disconnect the first electro-pneumatic valve 54, even if the toggle switch 56 is in working position. Instead, current will flow to the second electro-pneumatic switch 55, which will give an up-instruction to the valve 53, position I. This will cause the cut-off valve 60 to lock-in the pressure in the accumulator 50 so as to give preference for the hydraulic oil to flow from valve 53 to the cylinders 20A, 20B, so that the cylinders 20A and 20B immediately lift the entire feeding apron 2 and hence also the reel assembly 4 by pressing the rear lever arms 17 of the lever 18 down. Then a hydraulic pressure is built up in the accumulator 50, via the valve 51 and the built-in check valve 52. After a certain period of time, determined by the slowness of the gas spring 37, the cutter assembly 3 will sink back down until the horns 36 engage the stop 23 and the micro-switch 38 is closed again. As soon as the micro-switch 38 resumes its closed normal position, the feeding apron 2 falls down until the wheels 24 rest on the ground. It is to be appreciated, that the reel assembly 4 is moved along with all these movements, since the extension cylinders 40 are supported by the feeding apron 2. The effect is that there is no risk of the reel 42 running into the cutter-bar 3, as the feeding apron 2 is raised together with the cutter assembly 3, so that the "floating" wheels 24 leave the ground, when the cutter assembly 3 runs into some obstruction.

When in transport position, it is desirable that the feeding apron 2 with the cutter assembly 3, the wheels 24, and the reel assembly 4 are temporarily lifted to a higher position. The operator can accomplish this by feeding an up-instruction to the hydraulic cylinders 20A and 20B via the toggle switch 56, up position, which makes the pneumato-hydraulic valve 53 give an up-impulse, position I, until the operator lets go of the toggle switch 56. The valve 53 then stops in zero position, locking the entire system in the up position. To resume working position, the operator puts the toggle switch 56 into working position, thus causing the feeding apron 2 to sink to an operating position, determined by the setting of the wheels 24 and by the pre-determined hydraulic pressure in the cylinders 20A and 20B, balancing the feeding apron 2 and the reel assembly 4.

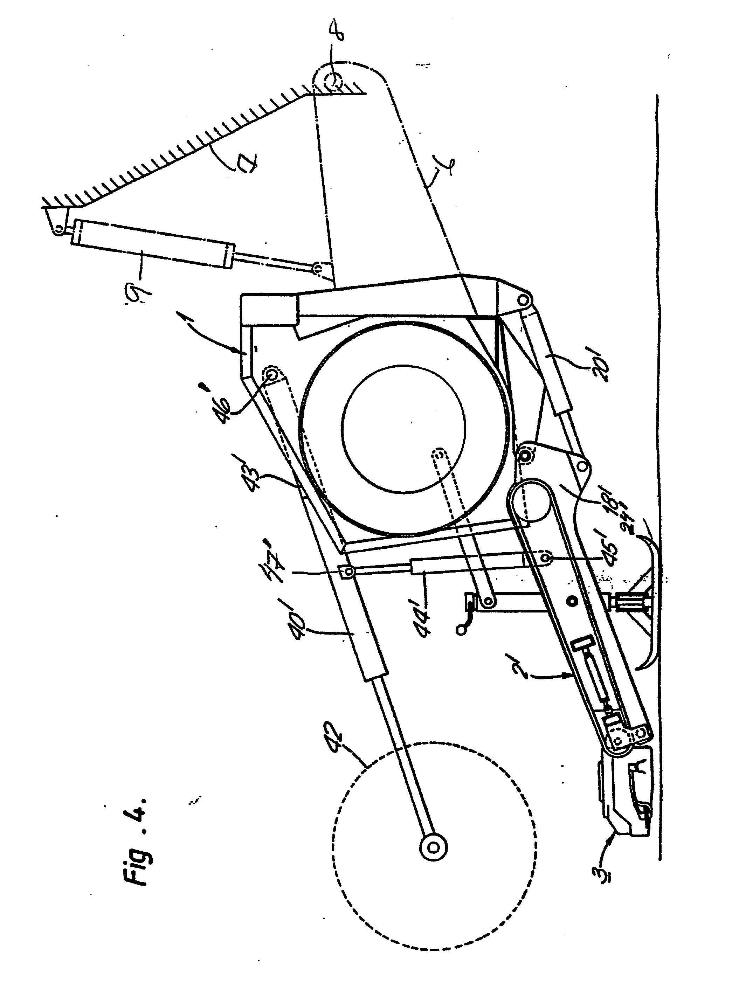

In the embodiment according to Fig. 4, details which have been modified or displaced in comparison to the embodiment of Fig. 1 have been indicated by a prime. Thus, there are hydraulic cylinders 20', arranged below the stationary table 1 to turn the mobile feeding apron 2'. The wheels have been replaced by skids 24'. The rear lever arm is shorter and is designated 18'. In this case the extension arm 43' is hinged to the stationary table 1 by a hinge 46'. The lifting cylinder 44', the piston rod of which is connected to the extension cylinder 40' through a hinge 47', is pivotally connected at its bottom end to the mobile feeding apron 2' by a hinge 45'. In this case also the reel assembly 42 is raised together with the mobile feeding apron 2', if the cutter assembly 3 runs into some obstruction, or if the feeding apron 2' is raised by the skids 24', which follow the ground, and the balanced hydraulic system, the reel 42 thus in both cases being prevented from running into the cutter assembly 3, when the reel 42 is working in its lowermost position. The rest of the construction is unchanged.

## Claims

1. A header for a harvesting machine provided with means for automatic elevation of the feeding apron of the header if the cutter assembly runs into the ground or some other stationary obstruction, comprising an auger and frame (1), a mobile feeding apron (2) which pivots about a first horizontal turning axis (10) located on the frame and balanced by a hydraulic system including a pair of hydraulic cylinders (20, 20A, 20B), detectors (38) arranged to sense upward rotation of the cutter assemly (3) through a certain angle about an axis (35) about which it is pivotable and regulating means (51, 52, 53, 54) designed to activate said hydraulic system when receiving a signal from the detectors, characterized in that the position of the auger and frame (1) in relation to the harvester (7) is constand during adjustment of the feeding apron (2);
each side of the feeding apron is integrated with a lever (18) which pivots about the first horizontal turning axis (10) and on which levers (18) the hydraulic cylinders (20, 20A, 20B) act to apply the balancing force;
the front of the feeding apron (2) has a second horizontal turning axis (35) about which the cutter assembly (3) is balanced and pivots;
the detectors (38) sense rotation of the cutter assembly (3) with respect to the feeding apron (2) about the second horizontal turning axis (35); and
the regulating means (51, 52, 53, 54) activate the hydraulic cylinders (20, 20A, 20B) providing the balancing force.

2. A header according to claim 1, **characterized** in that the cutter is normally held in a certain set position, the torque developed by the cutter assembly including the drive unit thereof about said second turning axis (35) being counter-balanced by a spring force or some other force corresponding thereto.

3. A header according to claim 2, **characterized** in that the cutter assembly is integrated with the front arm of a two-armed lever, that said set position is determined by an adjustable stop (23), against which either of the arms of said two-armed lever rests when in normal position, and that the rear lever arm (36) of the cutter assembly is acted upon by said spring force or said corresponding force.

4. A header according to any of the claims 1-3, **characterized** in that it also comprises a reel assembly with hydraulic, pivoting extension arms with hydraulically extendible supporting arms (44, 44'), said supporting arms being designed to bring about said pivoting of said extension arms and being based on the mobile feeding apron.

5. A header according to any of the claims 1-4, **characterized** in that the levers (18) of the mobile feeding apron are two-armed, said first turning axis (10) being the fulcrum point of the lever, and the gables of the mobile feeding apron (2) being integrated with the front lever arms, and that said hydraulic cylinders are arranged to press a pair of rear lever arms (17, 17') downwards and/or forwards thereby to raise the feeding apron.

6. A header according to any of the claims 1-5, **characterized** in that across the entire breadth of the mobile feeding apron there extends a support (21) under the apron, that said vertical means (26) for height adjustment are rigidly attached to the two ends of the support, and that the means (24) for following the ground contour are rigidly affixed to the support.

7. A header according to any of the claims 1-6, **characterized** in that the hydraulic cylinders (20A and 20B) which raise the feeding apron may be activated both by receiving an up-instruction via a pneumato-hydraulic valve (53) from a first electro-pneumatic directional valve (54) as directed by an impulse from said detector (38), when the cutter assembly runs into an obstruction, and by said pneumato-hydraulic valve depending upon an up-instruction from a second electro-pneumatic directional valve (55) as a result of the operator closing an electric circuit connected to said second valve.

## Patentansprüche

1. Mäh-/Schneidvorrichtung für Erntemaschinen mit einer Einrichtung zum automatischen Anheben einer Zufuhrvorrichtung dann, wenn ein Mäh- bzw. Schneidaggregat in den Boden oder andere feste Hindernisse eindringt bzw. an solchen anstößt, mit einem Tisch bzw. Rahmen (1), mit einer bewegbaren Zufuhrvorrichtung (2), welche um eine erste horizontale Schwenkachse (10) schwenkbar ist, die am Tisch bzw. Rahmen (1) angeordnet ist und durch ein Hydrauliksystem mit einem Paar Hydraulikzylinder (20, 20A, 20B) in Balance gehalten wird, mit Detektoren (38), welche die Bewegung des Mäh-/Schneidaggregats (3) um einen bestimmten Winkel um eine Achse (35) nach aufwärts feststellen, um welche dieses schwenkbar ist, und mit einer Regeleinrichtung (51, 52, 53, 54) zum Aktivieren des Hydrauliksystems dann, wenn ein Signal von den Detektoren empfangen wird, dadurch gekennzeichnet, daß die Stellung des Tischs bzw. Rahmens (1) in Bezug zur Erntemaschine (7) während der Einstellung der Zufuhrvorrichtung (2) konstant bleibt, daß jede Seite der Zufuhrvorrichtung (2) mit einem Hebel (18) integriert ist, der um die erste horizontale Schwenkachse (10) schwenkbar ist und auf den die Hydraulikzylinder (20, 20A, 20B) zum Erzeugen der Balancekräfte einwirken, daß die Vorderseite der Zufuhrvorrichtung (2) eine zweite horizontale Schwenkachse (35) aufweist, um welche das Mäh-/Schneidaggregat (3) schwenkt und balanciert wird, daß die Detektoren (38) die Drehbewegung des Mäh-/Schneidaggregats (3) in Bezug zur Zufuhrvorrichtung (2) um die zweite horizontale Schwenkachse (35) ermitteln und daß die Regeleinrichtungen (51, 52, 53, 54) die Hydraulikzylinder (20, 20A, 20B) zum Erzeugen der Balancekräfte aktivieren.

2. Vorrichtung nach Anspruch 1, dadurch gekennzeichnet, daß das Mäh-/Schneidaggregat (3) normalerweise in einer bestimmten Einstellage gehalten ist und daß das von dem Mäh-/ Schneidaggregat (3) einschließlich der Antriebseinheit derselben entwickelte Drehmoment um die zweite Schwenkachse (35) durch Federkraft oder andere dort entsprechend wirksame Kräfte gegenbalanciert wird.

3. Vorrichtung nach Anspruch 2, dadurch gekennzeichnet, daß das Mäh-/Schneidaggregat (3) mit dem Frontarm eines zweiarmigen Hebels integriert ist, daß die Einstellage durch einen einstellbaren Anschlag (23) bestimmt ist, an dem einer der Arme des zweiarmigen Hebels in der Normallage anschlägt, und daß der zurückliegende oder hintere Hebelarm (36) des Mäh-/Schneidaggregats (3) von der Federkraft oder entsprechenden Kraft beaufschlagt ist.

4. Vorrichtung nach einem der Ansprüche 1 bis 3, dadurch gekennzeichnet, daß sie auch eine Haspeleinrichtung mit hydraulisch schwenkbaren Auslegerarmen mit hydraulisch verlängerbaren Stützarmen (44, 44') aufweist, welche derart ausgebildet sind, daß sie das Verschwenken der Auslegerarme zustande bringen und an der bewegbaren Zufuhrvorrichtung (2) angreifen.

5. Vorrichtung nach einem der Ansprüche 1 bis 4, dadurch gekennzeichnet, daß die Hebel (18) der bewegbaren Zufuhrvorrichtung (2) zweiarmig ausgebildet sind, daß die erste Schwenkachse (10) der Drehpunkt des Hebels ist und die Giebel der bewegbaren Zufuhrvorrichtung (2) mit den Fronthebelarmen integriert sind, und daß die hydraulischen Zylinder so angeordnet sind, daß sie ein Paar hinterer Hebelarme (17, 17') nach unten und/oder nach vorn pressen und dadurch die Zufuhrvorrichtung (2) anheben.

6. Vorrichtung nach einem der Ansprüche 1 bis 5, dadurch gekennzeichnet, daß sich über die gesamte Breite der bewegbaren Zufuhrvorrichtung (2) ein Träger (21) unter der Zufuhrvorrichtung (2) hindurcherstreckt, daß eine Vertikalanordnung (26) zur Höheneinstellung fest mit den zwei Enden des Trägers (21) verbunden ist und daß den Bodenkonturen folgende Anordnungen (24) fest am Träger (21) befestigt sind.

7. Vorrichtung nach einem der Ansprüche 1 bis 6, dadurch gekennzeichnet, daß die Hydraulikzylinder (20A, 20B), welche die Zufuhrvorrichtung (2) anheben, durch Empfang sowohl eines AUF-Befehls über die ein pneumato-hydraulisches Ventil (53) von einem ersten elektro-pneumatischen Richtungsventil (54) als durch einen Impuls vom Detektor (38) aktiviert werden, wenn das Mäh-/Schneidaggregat (3) in ein Hindernis eindringt oder daran anstößt, und andererseits durch das pneumato-hydraulische Ventil in Abhängigkeit von einem AUF-Befehl von einem zweiten elektro-pneumatischen Richtungsventil (55) dann aktiviert werden, wenn eine Bedienungsperson einen elektrischen Schaltkreis schließt, welcher an das zweite Ventil angeschlossen ist.

## Revendications

1. Tablier pour une moissonneuse pourvu d'un moyen pour l'élévation automatique du tablier d'alimentation du tablier si l'assemblage de coupe passe dans le sol ou toute autre obstruction stationnaire, comprenant une tarière et un châssis (1), un tablier mobile d'alimentation (2) qui pivote autour d'un premier axe horizontal de rotation (10) qui est placé sur le châssis et qui est équilibré par un système hydraulique comprenant une paire de cylindres hydrauliques (20, 20A, 20B), des détecteurs (38) agencés pour détecter la rotation de l'assemblage de coupe (3) vers le haut, sur un certain angle autour d'un axe (35) autour duquel il peut pivoter et un moyen régulateur (51, 52, 53, 54) conçu pour activer ledit système hydraulique lors de la réception d'un signal des détecteurs, caractérisé en ce que la position de la tarière et du châssis (1) relativement à · la moissonneuse (7) est constante pendant l'ajustement du tablier d'alimentation (2) ; chaque côté du tablier d'alimentation est intégré à un levier (18) qui pivote autour du premier axe horizontal de rotation (10) et sur lequel levier agissent les cylindres hydrauliques (20, 20A, 20B) pour appliquer la force d'équilibrage ;

l'avant du second tablier d'alimentation (2) a un second axe horizontal de rotation (35) autour duquel est équilibré l'assemblage de coupe (3) et il pivote ;

le détecteur (38) détecte la rotation de l'assemblage de coupe (3) par rapport au tablier d'alimentation (2) autour du second axe horizontal de rotation (35) ; et les moyens régulateurs (51, 52, 53, 54) activent les cylindres hydrauliques (20, 20A, 20B) produisant la force d'équilibrage.

2. Tablier selon la revendication 1, caractérisé en ce que le moyen de coupe est normalement maintenu à une certaine position établie, le couple développé par l'assemblage de coupe comprenant son unité d'entraînement autour dudit second axe de rotation (35) étant contrebalancé par la force de ressort ou toute autre force correspondante.

3. Tablier selon la revendication 2, caractérisé en ce que l'assemblage de coupe est intégré au bras avant d'un levier à deux bras, en ce que ladite position établie est déterminée par une unité réglable (23) contre laquelle chacun des bras dudit levier à deux bras repose en position normale et en ce que sur le bras de levier arrière (38) de l'assemblage de coupe agit la force de ressort ou la force correspondante.

4. Tablier selon l'une quelconque des revendications 1-3, caractérisé en ce qu'il comprend également un assemblage d'un rouleau avec bras hydrauliques en extension pivotants avec bras hydrauliquement extensibles de support (44, 44'), lesdits bras de support étant conçus pour produire le pivotement desdits bras en extension et étant basés sur le tablier mobile d'alimentation.

5. Tablier selon l'une quelconque des revendications 1-4, caractérisé en ce que les leviers (18) du tablier mobile d'alimentation sont à deux bras, ledit premier axe de rotation (10) étant le point de pivot du levier et les pignons du tablier mobile d'alimentation (2) étant intégrés au bras de levier avant et en ce que lesdits cylindres hydrauliques sont agencés pour presser une paire de bras de levier arrière (17, 17') vers le bas et/ou vers l'avant pour ainsi élever le tablier d'alimentation.

6. Tablier selon l'une quelconque des revendications 1-5, caractérisé en ce que sur toute la largeur du tablier mobile d'alimentation s'étend un support (21) sous le tablier, en ce que lesdits moyens verticaux (26) pour l'ajustement de la hauteur sont rigidement attachés aux deux extrémités du support et en ce que les moyens (24) pour suivre le contour du sol sont rigidement fixés au support.

7. Tablier selon l'une quelconque des revendications 1-6, caractérisé en ce que les cylindres hydrauliques (20A et 20B) qui élèvent le tablier d'alimentation peuvent être activés à la fois par réception d'une instruction de remontée via une vanne pneumato-hydraulique (53) d'une première vanne directionnelle électropneumatique (54) dirigée par une impulsion du détecteur (38) lorsque l'assemblage de coupe passe dans une obstruction et par ladite vanne pneumato-hydraulique selon une instruction de remontée d'une seconde vanne directionnelle électropneumatique (55) par suite de la fermeture, par l'opérateur, d'un circuit électrique connecté à ladite seconde vanne.

Fig . 2.

Fig . 1.

EP 0 208 794 B1

# Fig. 3.

20A

20B

38

57

59

50

60

51

56

58

54

53

55

EP 0 208 794 B1

Fig . 4.